# EUROPEAN PATENT SPECIFICATION

(11) **EP 4 010 140 B1**
(45) Date of publication and mention of the grant of the patent: **22.05.2024**
(21) Application number: 20765352.8
(22) Date of filing: 05.08.2020
(51) Int. Cl.: B23C 5/10, B28B 17/00, B44B 1/06

(54) **SOFT AND SEMISOFT MATERIALS MILLING BIT**
FRÄSER FÜR WEICHE UND HALBWEICHE MATERIALEN
FRAISEUSE POUR MATERIAUX TENDRES ET SEMI-TENDRE

(30) Priority: 09.08.2019 EP 19472001
(43) Date of publication of application: 15.06.2022
(73) Proprietor: Ivanov, Andrey Zhivkov, 1616 Sofia (BG)
(72) Inventor: KAMENOV, Kamen Petrov, 1113 Sofia (BG)
(74) Representative: Benatov, Samuil Gabriel
(86) International application number: PCT/IB2020/057379
(87) International publication number: WO 2021/028781

(56) References cited:
- WO-A1-2010/050391
- JP-A- 2001 025 912
- US-A1- 2005 133 277
- US-A1- 2011 211 922
- US-A1- 2014 277 041
- US-A1- 2016 107 264
- US-B1- 6 234 725

## Description

### FIELD OF THE INVENTION

The invention relates to a soft and semisoft materials milling bit according to the preamble of claim 1. Such a soft and semisoft materials milling bit is known from US 6 234 725 B1.

### CURRENT TECHNOLOGY

CNC milling is a technology widely used in the field of automotive design, as well as in other areas of transportation and product design. This process allows the computer generated three-dimensional virtual models to materialize in full size by milling massive blocks of industrial clay. Industrial clay changes its physical characteristics in accordance with the temperature, from a soft plastic mass when heated to a state similar to hardened chocolate at room temperature. World automotive manufacturers use a vast quantity of clay milling equipment and rely on this technology for the manufacture of physical models with a high level of detail and realism. These models are of paramount importance for making the right design decisions when developing new models. In a highly competitive area of automotive design, it seems that in the foreseeable future, this technology will continue to be unique and irreplaceable as of today. Any improvement in the technique and efficiency of digital milling will have a positive and snowball effect on the overall process of developing and manufacturing automotive models, and accordingly, on the production of the final product. The current technology is comparable to that used for cutting hard materials. Clay milling machines are equipped with milling bits similar to the ones with a traditional configuration. They function acceptably when milling industrial clay, but are not geometrically optimized according to the specific material and limiting their potential. The results are satisfactory at the standard low cutting speed, but a significant decrease in quality is observed with a growth in the rotation speed and feed rate of the milling bit. The intensification of the cutting leads to an increase in resistance, appearance of resonant vibrations and melting of the working surface of the thermoplastic clay from the generated heat due to the rising friction. Melting the clay also causes adhesion and accumulation of material on the milling bit, which worsens the above problems. As a result, the quality of the milling surface is degraded.

It is known a milling bit for industrial clay revealed in DE 19815269 A1, with a cylindrical rod and a cutting part, which has a central hole that allows the passage of chips, and the cutting part is formed by two opposite cutting blades forming a ring. In this tool, the working area is limited only by the annular cutting part while the rod is not involved in cutting. In addition, the cutting edges are laid in the same plane perpendicular to the cutting direction, which is unfavourable, increases the cutting load and creates the potential for vibration of the tool.

It is also known another milling bit for soft materials found in GB1232440 A with a similar construction to DE 19815269 A1.

A milling bit is known from US 6 234 725 B1 adapted for cutting an expanded synthetic resinous material such as a Styrofoam plastic. Said milling bit comprises an evacuation bore in a shank and generally radially extending passages opening to the bore to conduct away material being removed by cutters.

### TECHNICAL ESSENCE OF THE INVENTION

The objective of the present invention is to provide a milling bit with a spherical ending that can form blocks of industrial clay into models by removing material in a stable and efficient way, with improved speed and surface quality regardless of changing cutting conditions. The improvement is achieved due to the specific geometry of the milling bit, which is adapted to the characteristics of the milling material. According to the invention there is provided a soft and semisoft materials milling bit comprising the features of claim 1. Preferred embodiments of the present invention are defined in the dependent claims.

The shape of the revolved surface described by at least one cutting edge of a tooth at the posterior part of the working sector may be cylindrical, conical, paraboloid, hyperboloid or a combination of the above.

The cavity in the anterior part of the working sector extends partially to the posterior part of the working sector.

The anterior cavity can be spherical, spheroidal, ellipsoidal, ovoid or other similar rotational shape.

In one embodiment the diameter of the anterior part of the working sector is the same (inscribed) as the diameter of the posterior part, in which the anterior part is a hemisphere.

In another alternative embodiment of the milling bit the diameter of the anterior part of the working sector is larger than the diameter of the posterior part.

In one embodiment the milling bit has one cutting tooth in the anterior part of the working sector, which is formed as a spherical shell element, representing a segment of a hollow sphere with an angular arc width α from 45° up to 180°, preferably from 60° to 180° in the Equatorial plane. When the angular arc width α of the spherical shell element is 90° to 180°in the Equatorial plane, in the wall of the spherical shell element can be provided additional through hole.

In another alternative variant of the milling bit, there are two diametrically opposite identical cutting teeth, which in the anterior part of the working sector have the form of spherical shell elements representing segments of a hollow sphere with an angular arc width α from 10° to 90° in the Equatorial plane.

In the subsequent alternative variant, the milling bit has three identical cutting teeth symmetrically arranged with respect to the Central axis of the milling bit, which in the anterior part of the working sector have the form of spherical shell elements representing segments of a hollow sphere with an angular arc width α from 10° to 45 in the Equatorial plane.

Resistance when machining the clay is the result of wedging and cutting action of the cutting edges and the friction between deflective surfaces of the milling bit and the clay. Resistance exerted on the milling bit from the clay is proportional to the strength (toughness and hardness) of the clay and depends directly on the size and geometry of the milling bit, the speed of rotation and feed of the tool.

The industrial clay being a plastic material, although cut off as chips has a tendency to adhere to deflective surfaces and drag, effect amplifying parasitic resistance and resulting negative consequences.

The present invention goals the reduction of cutting resistance and consequently vibration and produced heat by changing the geometry of the milling bit. This can improve the speed and quality of cutting and hence the productivity of the entire process.

### DESCRIPTION OF ATTACHED FIGURES

In more detail the milling bit according to the invention is explained by the preferred embodiments, given as nonlimiting the scope of the invention examples, with references to the figures attached.
Figure 1 presents one embodiment of the milling bit, according to the invention, in order to indicate the main parts of the tool design. The figure also shows the helicoidal angle γ of the helicoid curve, which forms the cutting edge 8 of the cutting tooth 5.
Figure 2 presents an enlarged cross-section in the Equatorial plane of the spherical anterior part 3 of the working sector 2 of the milling bit from Fig. 1. The figure shows the formation of the angular width α, the negative radial indentation 10 of the cutting tooth and the wedge angle β. It also shows relief angle ϕ and rake angle θ.
   At all figures from 3 to 13 are presented:
   - three side views at different axial rotation, where view B is rotated 120° relative to the view A, where view C is rotated 240°relative to view A, and it is so with milling bits with one or two cutting teeth, while for milling bits with 3 teeth the rotation angle between views A, B and C is 45°;
   - cross-sections of the milling bit in the anterior part D and posterior part E of the working sector;
   - enlarged frontal axial view F of the milling bit with magnification 1:1.7 relative to views A, B, C.

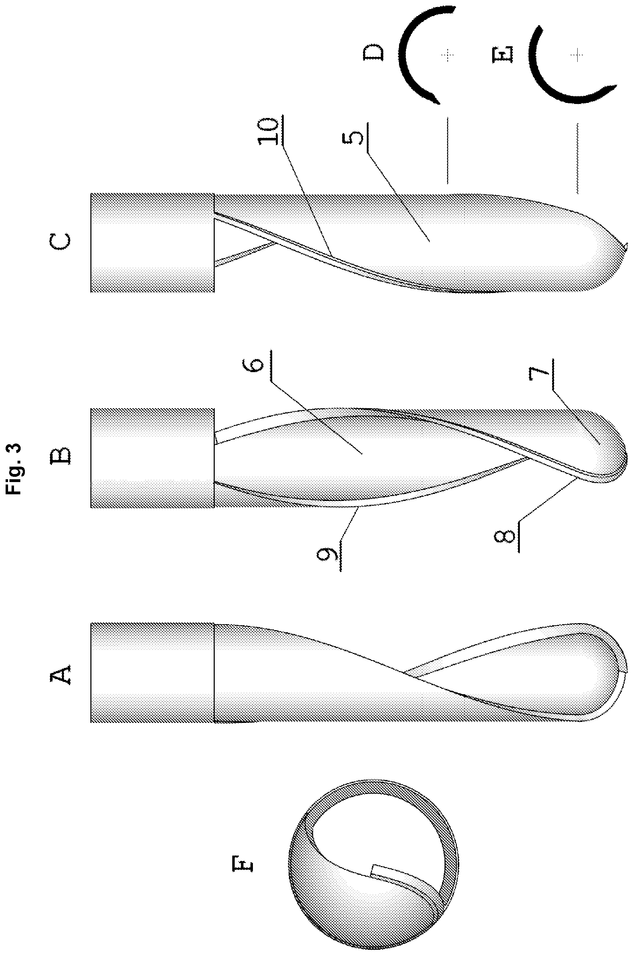

Figure 3 presents an embodiment of the milling bit with a single cutting tooth with an inscribed anterior spherical part, in which the angular width of the spherical shell is about 180°.

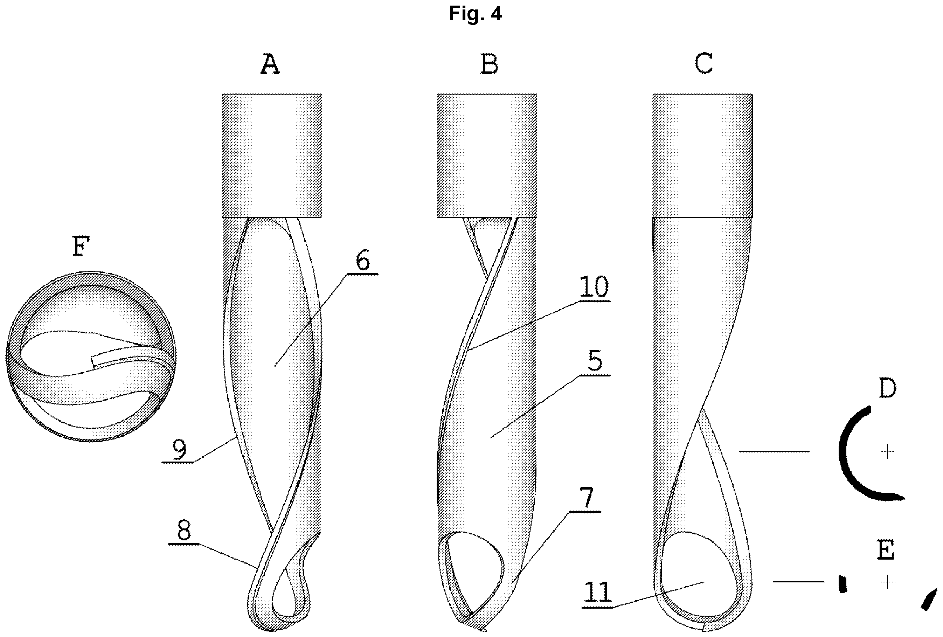

Figure 4 presents a modification of the milling bit from Fig. 3, in which there is a through hole in the spherical shell element.

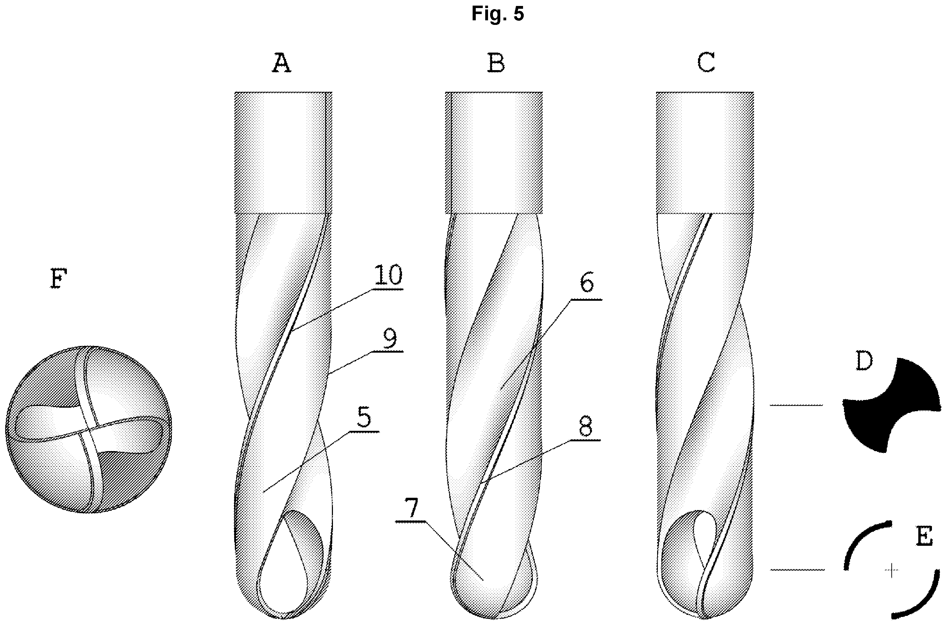

Figure 5 presents an embodiment of the milling bit with two cutting teeth with an inscribed anterior spherical part, in which the angular width of the spherical shells is about 90°.

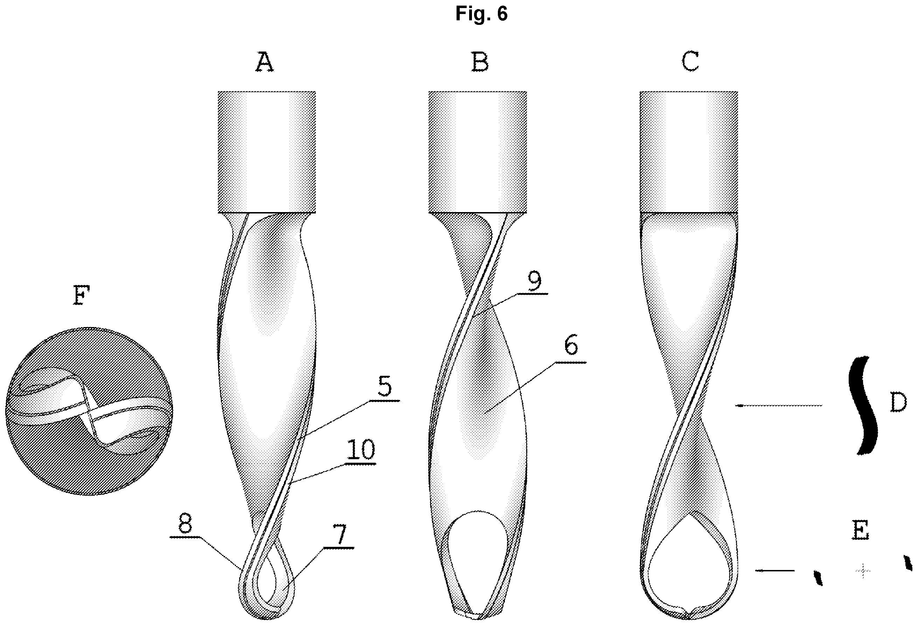

Figure 6 presents an embodiment of the milling bit with two cutting teeth with an inscribed spherical anterior part, in which the angular width of the shells is about 18°.

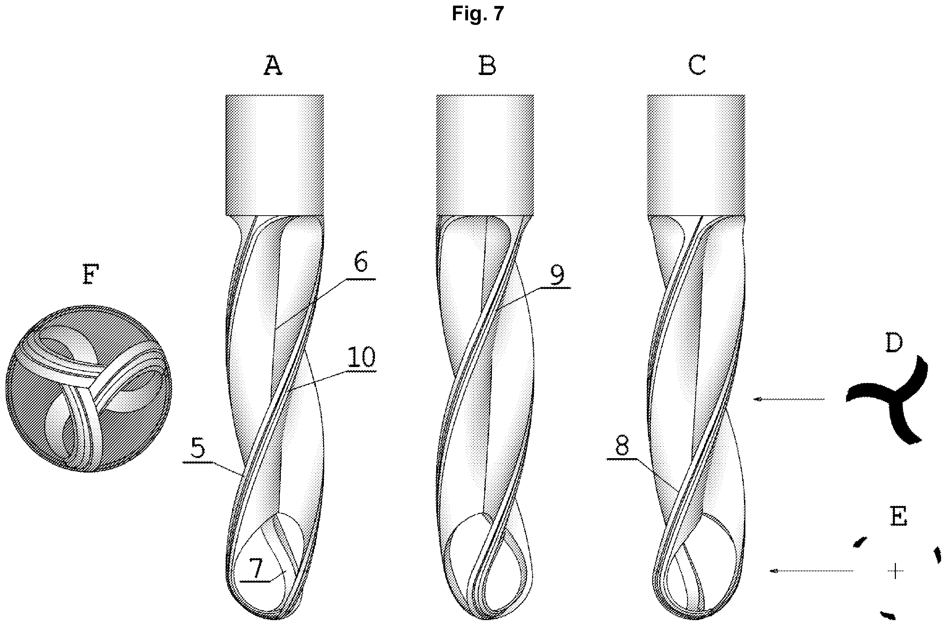

Figure 7 presents an embodiment of the milling bit with three cutting teeth with an inscribed spherical anterior part, in which the angular width of the shells is about 16°.

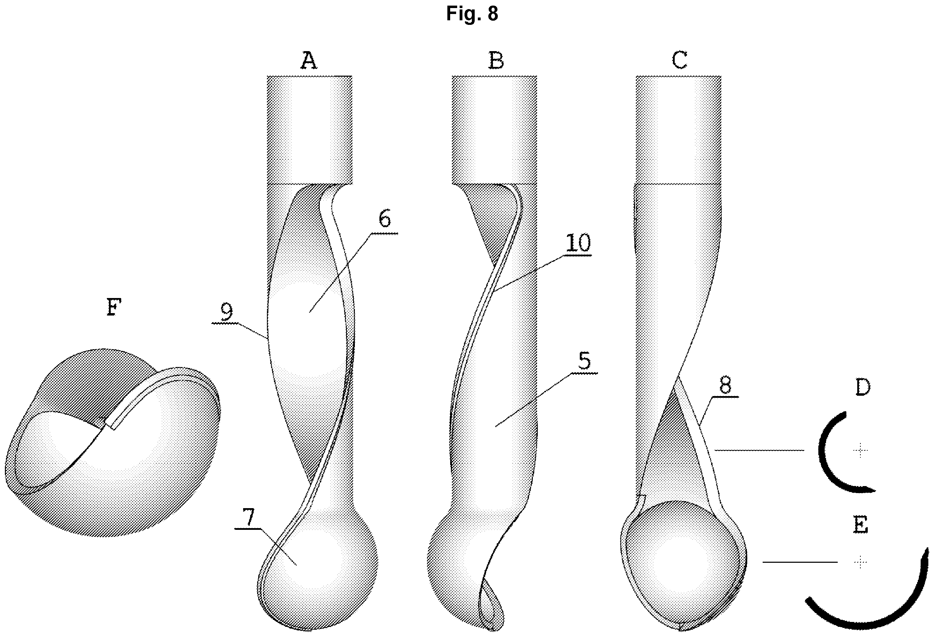

Figure 8 presents an embodiment of the milling bit with a single cutting tooth with an exceeding anterior spherical part, in which the angular width of the spherical shell around 180°.

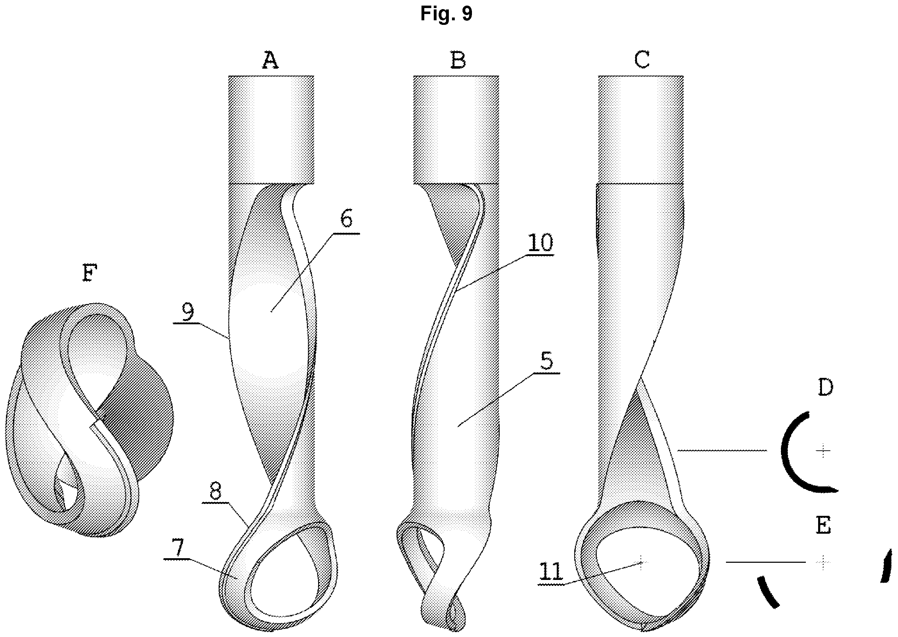

Figure 9 presents a modification of the embodiment from Fig. 8 with an additional through hole in the spherical shell.

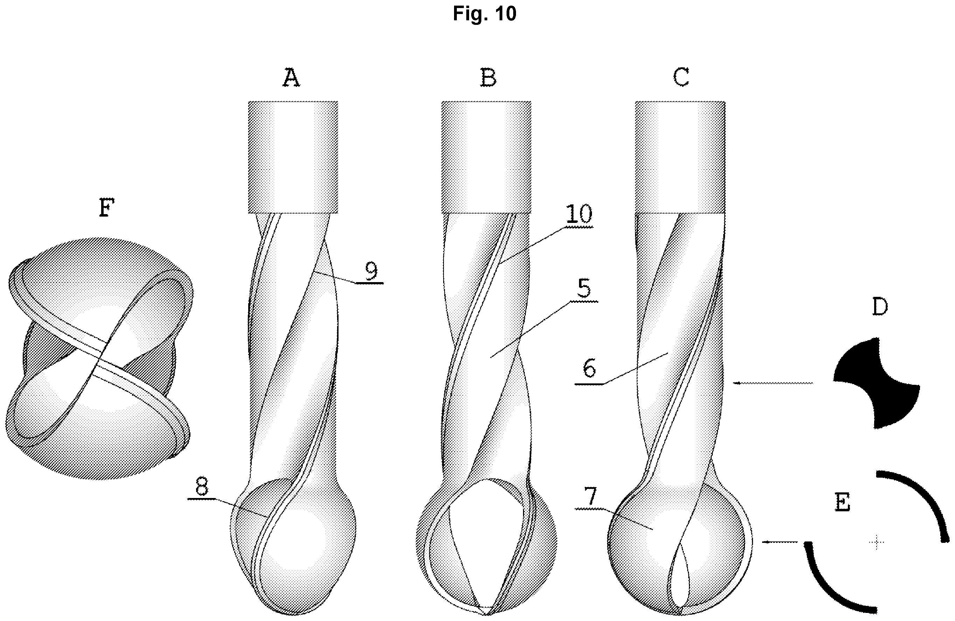

Figure 10 presents an embodiment of the milling bit with two cutting teeth with an exceeding spherical anterior part, in which the angular width of the spherical shells is about 90°.

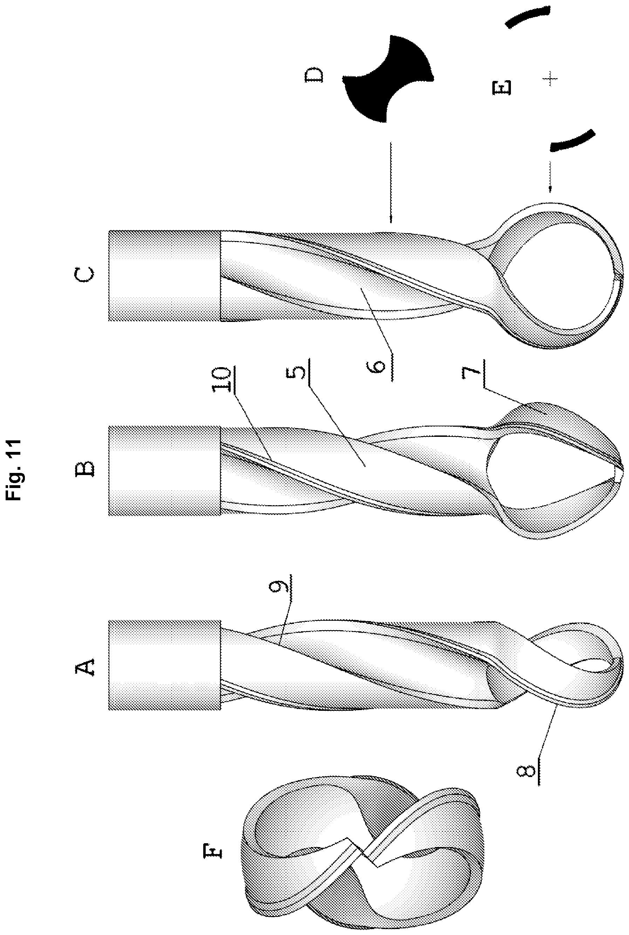

Figure 11 presents a modification of the embodiment from Fig. 10 with an angular width of spherical shells around 38°.

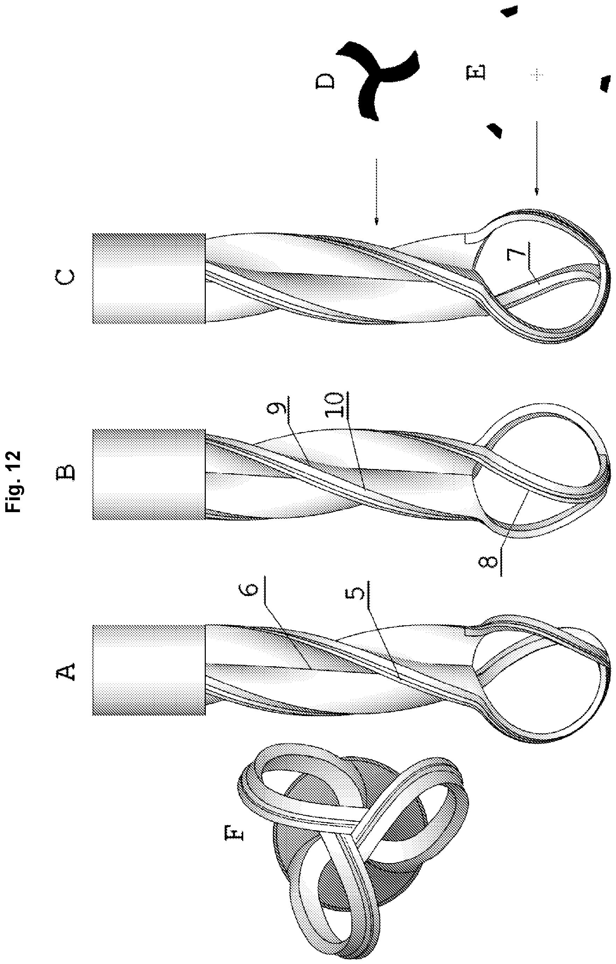

Figure 12 presents an embodiment of the milling bit with three cutting teeth with an exceeding spherical anterior part, in which the angular width of the spherical shells is about 14°.

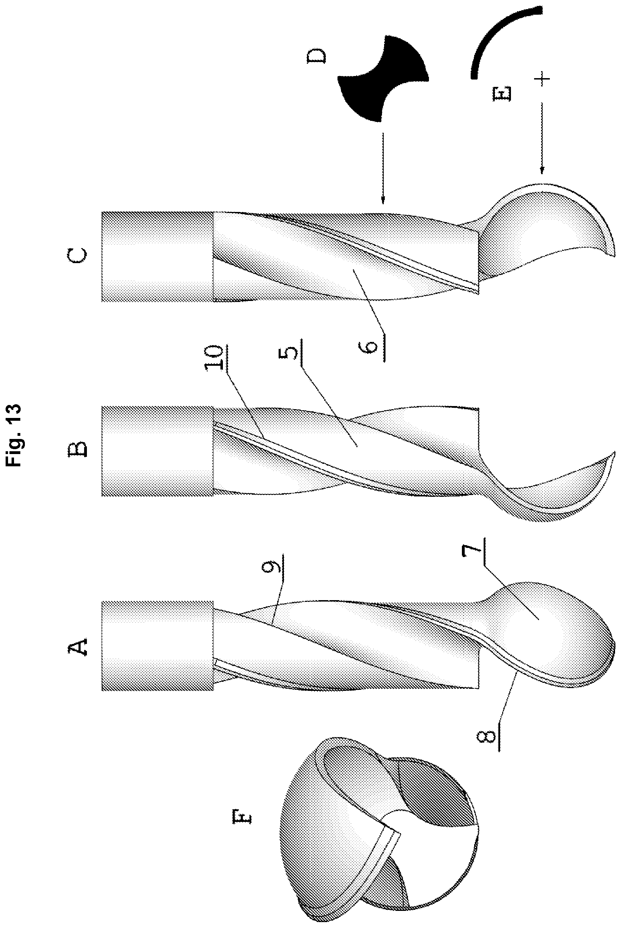

Figure 13 presents a combined embodiment with two cutting teeth at the posterior part of the working sector and one spherical shell element in the anterior part of the working sector, in which the angular width of the shell element is about 90°.

### EXEMPLES OF EXECUTION AND FUNCTIONING OF THE INVENTION

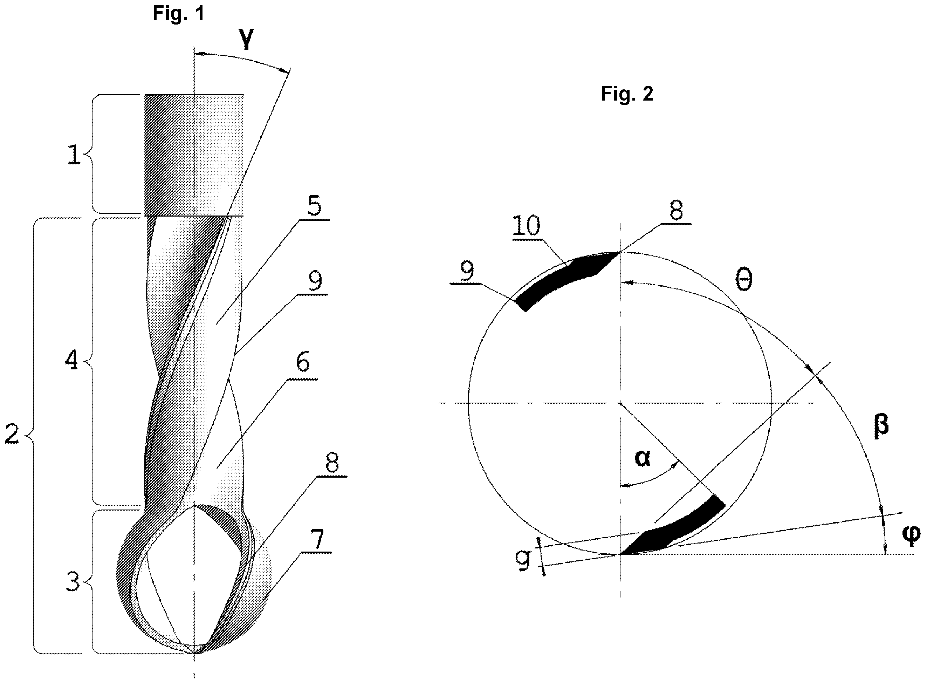

The improved milling bit according to the invention is a soft and semisoft materials milling bit according to claim 1 with one or more cutting teeth 5 (Fig. 1). The milling bit may include two integrally attached sections and subordinated to a single central axis of rotation as follows:
1) **Shank 1,** which is a solid cylindrical or of another form rod and serves to secure the tool in the chuck of the milling machine. The diameter of the shank 1 may be larger or smaller than the diameter of the working sector.
2) **Working sector 2,** which is fixed to the shank 1. It has one or more longitudinal cutting teeth 5 with helicoidal around the axis of rotation cutting edges 8 and, accordingly, with one or more flutes 6. The term "helicoidal cutting edge" in this description means a cutting edge, which is formed as a projection of a helicoid on the surface of the working sector and ends at the intersection of the milling bit's axis and the front spherical surface of the anterior part, wherein the forming helicoid has a helicoidal angle γ from 10° to 45°, preferably from 20° to 35°(Fig.1). Each cutting tooth 5 has a corresponding flute 6 parallel to the trajectory of the cutting edge 8 and extending along the length of the working sector 2. The flute 6 is formed immediately after the trailing (rear non-cutting) edge 9 of each cutting tooth 5 with respect to the direction of rotation. The shape, the cross-section and size of the flutes 6 provide sufficient space for easy chip formation and removal without compromising the structural strength of the teeth. In transversal section the shape of the flutes 6 is optimized and smooth curve in the space between the cutting teeth 5, without sharp corners, in order to avoid stress concentration in the tool and chip retention conditions. The transverse profile of the flute can be variable at length of the tool, for example, deeper or shallower in order to provide greater strength or rigidity of the tool in the corresponding area.

The working sector 2 consists of:
- a cutting anterior part 3, which is a part of a sphere and
- a cutting posterior part 4 fixed to the shank 1, which is a transition between the shank 1 and the spherical anterior part 3. When the tool is rotated, the cutting edges 8 at the posterior part 4 geometrically describe a revolved surface in the form of a cylinder, cone, paraboloid, hyperboloid, or a combination of the above and ending with the spherical anterior part 3.

The number of the cutting teeth 5 can be one or more, respectively, the number of cutting edges 8 can be one or more. More cutting edges would mean presumably a higher cutting speed because there is less material to trim by one edge. On the other hand, more edges mean reducing the size of the flutes, respectively the space for the release of the chips, which could lead to accumulation of shavings, fusion and clutter. Therefore, the number of cutting edges between 1 and 5 is considered optimal. Preferably the cutting teeth 5 are no more than three.

The forward part of the cutting 5 tooth of the milling bit (Fig. 2) is formed as a straight or curved cutting wedge (cutting blade). Increasing the sharpness of the cutting wedge, therefore decreasing the angle β of the wedge, diminishes deformation in the cut off layer, reduces cutting forces and generated heat. On the other hand, as the angle β decreases, the section of the cutting blade is weakened, which leads to reduction of its strength. Therefore, the sharpness of the cutting part should be such as to ensure minimum cutting force with sufficient strength of the tool. This is achieved by selecting the appropriate geometric parameters of the cutting blade. The wedge part of the cutting tooth has three basic dimensions: length, width (thickness) and depth as the first two form a section area (Fig. 2). Of paramount importance for the cutting resistance is the total section area of the milling bit actively engaged in contact with the clay and the wedge angle β enclosed between deflecting surfaces of the cutting tooth. The ideal theoretical situation would be at zero thickness g of the cutting blade and deflecting angles equal to zero (extremely sharp wedges), which would mean the absence of a second dimension of the cutting blade. In practical terms, this is unrealizable due to the inability to maintain the cutting edge without the thickness i.e. material structure. The angle ϕ is the angle enclosed between the outer deflecting surface of the cutting tooth and the motion vector of the cutting edge, which is tangent to the circle described by the cutting edge 8 during rotation. This angle can have values from 0° up to about 5°. Providing this angle serves to reduce the parasitic friction between the outer part of the cutting edge and the material. Improvement pursued by the invention is to reduce to a practical minimum 0.3 - 5 mm the thickness g of the cutting blade of the tooth and limit wedge angle β between 3°- 40° at the anterior end of the cutting tooth 5. This also means to maintain high as possible positive values of the rake angle θ between 45° and 87°. The rake angle (θ on figure 2) is the angle of the cutting face relative to the normal to the cutting edge's motion vector. In the case of revolving tools, the normal is the radius of the motion circle. There are three types of rake angles: positive, zero or neutral, and negative. The positive rake angle means that the tool is sharper and pointed. However, this reduces the strength of the tool and at a small wedge angle β the cutting edge 8 may chip away when used on more resilient materials, but could work with great benefits on materials with higher softness like industrial clay. Such benefits are reduction of the cutting forces, decrease of the temperature in the work zone and cleaner cut. Generally, tool with greater positive rake angle will create better quality machined surface faster.

Another improvement of the invention is facilitation the evacuation of the chips by means of a spherical cavity at the anterior part 3 of the working sector 2 and cavities along entire cutting sector 2 in some embodiments. The degree of reduction of the cutting tooth's blade section and deflecting angles depends on the milling bit's architecture and manufacturing technology.

An essential feature of milling bit, according to the invention, is that the anterior part 3 of the working sector 2 is hollow. Accordingly, the anterior cavity is formed by the inner surface of the tooth 5 or teeth and extends at least in the anterior part 3, but can also continue to the posterior part 4. The flutes 6 transit into the anterior cavity and together form the drainage space for the chips.

In the embodiments with one cutting edge 5 shown in the figures 3 and 4 and described in more detail below, the entire working sector 2 is hollow, and the deep channel 6 merges with the anterior cavity.

The shape of the anterior cavity can be spherical, spheroidal, ellipsoidal, ovoid, cylindrical or other similar revolved shape or a combination thereof. Physically, the anterior cutting part 3 of the working sector 2 is a hollow sphere or a hemisphere reduced to one or more identical spherical shell elements 7 corresponding to the cutting teeth 5. Shell elements 7 are actually spherical segments of the theoretical sphere of the anterior part 3. The cutting edge 8 in the shell element 7 is a continuation of the projection of the helicoid forming the cutting edge 8 along its entire length.

The thickness of the shell segments 7 is preferably 0.3 - 5 mm, and must meet the minimum strength parameters permitted by the implemented material and production technology. This allows a reduction in the thickness of the cutting teeth 5 at the anterior part and, accordingly, decrease of resistance. The shell elements 7 of the cutting teeth 5 in the anterior part 3, as spherical segments, may have different angular widths depending on the number of teeth 5. Here indicated the angular width of the shell elements 7 represents the angle α between the end points of the cutting edge 8 and the trailing edge 9 of the shell element 7 and the center of the theoretical sphere of the anterior part 3, measured at the Equatorial plane of this imaginary sphere (Fig. 2).

With an angular width α between 90° and 180°, an additional through hole 11 can be provided on the surface of the shell element 7 for better evacuation of chips (shavings). Preferably, the additional hole 11 is perpendicular to the axis of rotation of the milling bit.

The angular width α of the shell element 7 is important for the structural strength of the milling bit and particularly to the spherical anterior part 3 of the working sector 2. The angular width in the range of 100°- 180° gives good strength to the cutting shell (anterior cutting spherical segment), but reduces the evacuation of chips and is practically applicable when implemented with one anterior spherical cutting segment 7. The angular width α in the range of 10°- 90° gives a good release of chips, but would be structurally weak in execution with the individual cutting tooth.

In the variant with one tooth the shell element has angular arc width α about 45° - 190°, preferably about 60° - 180°degrees.

In the variant with two cutting teeth 5 their shell elements 7 have angular arc width α of 8°- 90°.

In the variant with three identical cutting teeth 5 rotationally symmetrical to the central axis of the milling bit, their shell elements 7 have angular arc width from 8° - 45°.

Reducing the angular width α of the spherical shells 7 of the cutting teeth 5 also reduces the cutting resistance. This also facilitates the evacuation of chips.

When cutting teeth 5 are two or more, they are rotationally symmetrical relative to the axis of rotation of the tool, and accordingly, at equal peripheral distances from each other to ensure a uniform load on the tool body. For the same reason, the flutes 6 between the cutting teeth of the tool have the same size and shape, which ensures an equal distribution of chips.

The diameter of the spherical anterior part 3 can be the same as the diameter of the posterior part (inscribed diameter) or could exceed the diameter of the posterior part 4.

In the embodiments of the invention shown on the figures in case where the diameter of the anterior part 3 is the same as the diameter of the posterior part 4, the shape of the anterior part 3 is a hemisphere. Expressed geometrically, it is a union between a cylinder or other revolved geometric figure and a sphere of the same diameter (Fig. 3, 4, 5, 6). When the diameter of the anterior part 3 is greater than the diameter of the posterior part 4, then the shape of the anterior part 3 is a portion of a sphere larger than a hemisphere. Expressed geometrically, it is a union between a cylinder or other revolved geometric figure and a sphere of different diameters, the sphere being larger.

The outmost diameter of the milling bit's anterior part, according to the invention, can be from 2,5 mm to about 100 mm. The theoretical maximum size of the milling bit is not limited, but in practical terms, the size will be determined by the overall dimensions and details of the milled model. Larger cutters will have higher productivity. Too small milling bits will have reduced efficiency. Milling bits of a large diameter - 15-60 mm will cut material faster than a small 2.5-15 mm, so the largest that can do the task is preferred. When milling a concave shape (cavity), the diameter of the milling bit will be limited by the size of the internal curves. The radius of milling bit should be equal or smaller than the radius of the smallest negative geometric arc used in the virtual model.

To reduce the parasitic friction between the outer surface of the tool and the milling material, preferably on the outer surface of the cutting tooth 5, behind and along the cutting edge 8 is provided a negative radial indentation 10 (Fig. 2).

### Examples:

This invention is illustrated below in several embodiments.
A) Milling bits with inscribed hemispherical ends.
   1. Figure 3 shows a variant with a single cutting edge 5. The posterior part 4 has the shape of a cylinder and has the same diameter as the hemispherical anterior part 3 of the working sector 2. The angular width α of the arc in the Equatorial plane of the cutting spherical shell 7 is in the order of 180°. Figure 4 shows a modification of the variant on the figure 3, in which the spherical shell is provided with a hole 11 that communicates with the anterior cavity and contributes to better chip removal and prevention of accumulation of material in the anterior part 3 of the working sector 2.
   2. Variant with two cutting edges. The posterior part 4 is cylinder-shaped and has the same diameter as the hemispherical anterior part 3 of the working sector 2.
      - Figure 5 presents a modification in which the angular width α of the arc in the Equatorial plane of the cutting spherical shell elements 7 is about 90°. The anterior cavity is oval and also extends to the posterior part 4 of the working sector 2.
      - Figure 6 presents a modification in which the angular width α is about 18°, and the flutes 6 are shallow and flattened.
   3. Variant with three cutting edges. The posterior part 4 is cylinder-shaped and has the same diameter as the hemispherical anterior part 3 of the working sector 2. In the example shown on Fig. 7, the angular width of the arc α is about 16°.
B) Milling bits with enlarged spherical end.

As the diameter of the anterior spherical end increases, the maximum proportional difference between the diameter of the posterior part 4 and the diameter of the anterior spherical part 3 of the cutting sector 2 is preferable to be about 1:3.
1. Variant with one cutting edge (Fig. 8, 9). Spherical anterior part 3 has larger diameter than the posterior part 4 of the working sector, which is cylindrical. The angular width α of the arc in the Equatorial plane of the cutting spherical shell 7 is about 180°. The figure 9 shows an example in which the spherical shell 7 has additional through hole 11 that communicates with the anterior cavity and contributes to better chip removal and prevention of material accumulation in the anterior part 3.
2. Variant with two cutting edges. The spherical anterior part 3 has larger diameter than the posterior part 4 of the working sector, which is cylindrical in shape. The angular width α of the cutting spherical shell elements 7 is about 90° in the example of Fig. 10 and about 38° in the example of Fig.11.
3. Variant with three cutting edges (Fig. 12). The spherical anterior part 3 has a larger diameter than the posterior part 4 of the working sector 2, which is cylindrical in shape. The angular arc width α of the cutting spherical shell elements 7 is 14°.
4. A combined variant is also possible, in which the posterior part 4 of the working sector 2 has two or more cutting teeth 5, but only one of them transit in the form of a spherical shell element 7 in the anterior part 3 of the working sector 2. The example shown on Fig. 13 has two cutting teeth 5 at the posterior part 4 and one cutting spherical shell element 7 at the anterior part 3 with an angular arc width α around 90°.

In practical aspect, milling bits can be manufactured in one piece, composite and assembled. Milling bits can be made of one or more mechanically connected or welded elements in accordance with the production technology. The milling bits can be made of materials such as a tool steel and include wear-resistant inserts made of high-strength and hard synthetic materials. It is desirable that the surface of the tool is polished and coated with nonsticking layer.

### Functioning of the invention

After fixation in the chuck of the mill, the milling bit starts turning, and after reaching the operational revolutions, it enters the clay and is driven linearly along a pre-generated trajectory. Milling bit follows the linear trajectory via the theoretical centre of the spherical anterior part. The combination of rotational and translational movement of the tool in the material creates a cutting action. The process is subtractive, and as a result of the cutting action, the material is systematically cut off in the form of a channel with a section identical to the contour of the figure described by the cutting edges when the tool is rotated around the axis of rotation. The assembly of carved multiple parallel, overlapping and connected channels and cavities, whether shallow or deep forms the clay model surface.

Reference numbers of technical features are included in the claims solely to enhance the clarity of the claims and, therefore, these reference numbers have no limiting effect on the interpretation of the elements indicated by these reference numbers.

## Claims

1. Soft and semisoft materials milling bit comprising:
- a shank (1) and
- a working sector (2) comprising:
• a cutting anterior part (3) representing part of a sphere,
• a cutting posterior part (4), fixed to the shank (1), located between the shank (1) and the spherical anterior part (3),
• at least one cutting tooth (5), extending throughout the entire length of the working sector, with a cutting edge (8) that is formed as a projection of a helicoid on the surface of the working sector (2) and ending at the intersection of the axis of the milling bit and a front spherical surface of the anterior part (3),
• at least one helical flute (6) to the cutting tooth (5) extending along the length of the working sector (2) following along the path of the cutting edge (8),
wherein at least the spherical anterior part (3) of the working section (2) is hollow, **characterized in that** an open anterior cavity is formed by an inner surface of said at least one cutting tooth (5) that in the region of said anterior cavity is in the form of a spherical shell element (7) with a wall thickness from 0.3 mm to 5 mm, wherein a wedge angle β is between 3°- 40° at the anterior end of the cutting tooth (5), wherein a rake angle θ of the cutting tooth (5) at least in the anterior part of the working sector is between 45°- 87°, wherein the forming helicoid of the cutting edge (8) has a helicoidal angle of 10° - 45°, preferably from 20° to 35°.

2. Milling bit according to claim 1, **characterized in that** the shape of a revolved surface described by at least one cutting edge (8) of the cutting tooth (5) at the posterior part (4) may be cylindrical, conical, paraboloid, hyperboloid, or a combination of the above.

3. Milling bit according to claim 1, **characterized in that** the anterior cavity in the anterior part (3) of the working sector (2) partially extends to the posterior part (4) of the working sector (2).

4. Milling bit according to any of claims from 1 to 3, **characterized in that** the anterior cavity has a spherical, spheroidal, elliptical, ovoid or other similar rotational shape.

5. Milling bit according to any of claims from 1 to 4, **characterized in that** the diameter of the anterior part (3) is the same as the diameter of the posterior part (4), wherein the anterior part (3) is a hemisphere.

6. Milling bit according to any of claims from 1 to 4, **characterized in that** the diameter of the anterior part (3) is larger than the diameter of the posterior part (4).

7. Milling bit according to any of the preceding claims, **characterized in that** the anterior part (3) of the working section has one cutting tooth (5), which is formed as a spherical shell element (7), representing a segment of a hollow sphere with an angular arc width α in the Equatorial plane from 45° to 180°, preferably from 60° to 180°.

8. Milling bit according to claim 7, **characterized in that** the angular width α in the Equatorial plane of the arc of the spherical shell element (7) is from 90° to 180° and an additional through hole (11) is provided in the wall of the spherical shell element (7).

9. Milling bit according to any of claims from 1 to 6, **characterized in that** there are two diametrically opposite identical cutting teeth (5), which in the anterior part (3) of the working sector (2) have the shape of spherical shell elements (7), representing segments of a hollow sphere with an angular arc width α in the Equatorial plane from 10° to 90°.

10. Milling bit according to any of claims from 1 to 6, **characterized in that** there are three identical cutting teeth (5) symmetrically arranged with respect to central axis of milling bit, said cutting teeth (5) at the anterior part (3) of the working sector (2) have the shape of spherical shell elements (7) representing a segment of a hollow sphere with an angular width α of the arc in the Equatorial plane from 10° to 45°.

## Patentansprüche

1. Fräser für weiche und halbweiche Materialien, der Folgendes umfasst:
- einen Schaft (1) und
- einen Arbeitssektor (2), der folgendes umfasst:
• einen schneidenden vorderen Teil (3), der einen Teil einer Sphäre darstellt,
• ein schneidender hinterer Teil (4), der am Schaft (1) befestigt ist und sich zwischen dem Schaft (1) und dem sphärischen vorderen Teil (3) befindet
• mindestens einen Schneidzahn (5), der sich über die gesamte Länge des Arbeitssektors, mit einer Schneidkante (8), die sich als Projektion eines Helikoids auf die Oberfläche des Arbeitssektors (2) erstreckt und am Schnittpunkt der Achse des Fräsers und an der vorderen Sphärefläche des vorderen Teils (3) endet
• mindestens eine schraubenförmige Nut (6) zum Schneidzahn (5), die sich entlang der Länge des Arbeitsbereichs (2) entlang des Verlaufs der Schneidkante (8) erstreckt,
wobei zumindest der sphärische vordere Teil (3) des Arbeitsabschnitts (2) hohl ist und **dadurch gekennzeichnet, dass** eine offene vordere Kavität durch eine Innenfläche des mindestens einen Schneidzahns (5) gebildet wird, der im Bereich der vorderen Kavität die Form von Sphäreschalen-Element (7) mit einer Wandstärke von 0,3 mm bis 5 mm hat, wobei der Keilwinkel **β** am vorderen Ende des Schneidzahns (5) zwischen 3°- 40° ist, wobei der Spanwinkel **θ** des Schneidzahns (5), zumindest im vorderen Teil des Arbeitssektors, zwischen 45°- 87° beträgt, dazu das formbildende Helikoid der Schneidkante (8) einen Helikoidwinkel von 10° - 45°, vorzugsweise 20° bis 35°, aufweist.

2. Fräser nach Anspruch 1, **dadurch gekennzeichnet, dass** die Form einer umlaufenden Oberfläche, die durch mindestens eine Schneidkante (8) des Schneidzahns (5) am hinteren Teil (4) bestimmt wird, kann zylindrisch, konisch, paraboloid, hyperboloid oder eine Kombination der obigen sein kann

3. Fräser nach Anspruch 1, **dadurch gekennzeichnet, dass** die vordere Kavität in der der vordere Teil (3) des Arbeitsbereichs (2) sich teilweise bis zum hinteren Teil (4) des Arbeitsbereichs (2) erstreckt

4. Fräser, der nach einem der Ansprüche von 1 bis 3, **dadurch gekennzeichnet, dass** der vordere Hohlraum eine sphärische, sphäroidische, elliptische, eiförmige oder andere ähnliche Rotationsform aufweist.

5. Fräser nach einem der Ansprüche von 1 bis 4, **dadurch gekennzeichnet, dass** der Durchmesser des vorderen Teils (3) gleich dem Durchmesser des hinteren Teils (4) ist, wobei der vordere Teil (3) eine Halbkugel ist.

6. Fräser nach einem der Ansprüche 1 bis 4, **dadurch gekennzeichnet, dass** der Durchmesser des vorderen Teils (3) größer ist als der Durchmesser des hinteren Teils (4).

7. Fräser nach einem der vorhergehenden Ansprüche, **dadurch gekennzeichnet, dass** der vordere Teil (3) des Arbeitsabschnitts einen Schneidzahn (5) aufweist, der als ein Sphäreschalen-Element geformt ist (7), was ein Segment einer Hohlsphäre mit einer Winkelbogenbreite **α** in der Äquatorialebene von 45° bis 180°, vorzugsweise von 60° bis 180°, darstellt.

8. Fräser nach Anspruch 7, **dadurch gekennzeichnet, dass** die Winkelbreite α in der Äquatorialebene des Bogens des Sphäre-Schalenelements (7) 90° bis 180° beträgt und in der Wandung des Sphäreschalen-Element (7) ein zusätzliches Durchgangsloch (11) vorgesehen ist.

9. Fräser nach einem der Ansprüche 1 bis 6, **dadurch gekennzeichnet, dass** zwei diametral gegenüberliegende identische Schneidzähne (5) vorhanden sind, die im vorderen Teil (3) des Arbeitssektors (2) die Form von Sphäreschalen-Element (7) aufweisen, die Segmente einer Hohlsphäre mit einer Winkelbogenbreite α in der Äquatorebene von 10° bis 90° darstellen.

10. Fräser nach einem der Ansprüche von 1 bis 6, **dadurch gekennzeichnet, dass** drei identische Schneidzähne (5) symmetrisch in Bezug auf die Mittelachse des Fräsers angeordnet sind, wobei die Schneidzähne (5) am vorderen Teil (3) des Arbeitssektors (2) die Form von Sphäreschalen-Element (7) aufweisen, die ein Segment einer Hohlsphäre mit einer Winkelbreite **α** des Bogens in der Äquatorialebene von 10° bis 45° darstellen.

## Revendications

1. Fraise à matériaux tendres et semi-tendres comprenant:
- une tige (1) et
- un secteur de travail (2) comprenant:
* une partie antérieure coupante (3) représentant une partie de sphere,
* une partie postérieure coupante (4), fixée à la tige (1), située entre la tige (1) et la partie antérieure sphérique (3),
* au moins une dent coupante (5), s'étendant sur toute la longueur de la secteur de travail, avec une arête de coupe (8) qui est formée comme une projection d'un hélicoïde sur la surface du secteur de travail (2) et se terminant à l'intersection de l'axe du trépan de fraisage et d'une surface sphérique avant de la partie antérieure (3),
* au moins une cannelure hélicoïdale (6) à la dent de coupe (5) s'étendant le long de la longueur du secteur de travail (2) suivant le trajet de l'arête de coupe (8),
dans lequel au moins la partie antérieure sphérique (3) de la section de travail (2) est creuse, **caractérisé en ce qu'**une cavité antérieure ouverte est formée par une surface interne de ladite au moins une dent coupante (5) qui dans la région de ladite cavité antérieure se présente sous la forme de un élément de coque sphérique (7) avec une épaisseur de paroi de 0,3 mm à 5 mm, dans lequel un angle de coin β est compris entre 3° et 40° à l'extrémité antérieure de la dent de coupe (5), dans lequel un angle d'inclinaison θ de la dent de coupe (5) au moins dans la partie antérieure du secteur de travail est compris entre 45° et 87°, dans lequel l'hélicoïde de formage de l'arête de coupe (8) a un angle hélicoïdal de 10° - 45°, de préférence de 20° à 35°.

2. Fraise selon la revendication 1, **caractérisée en ce que** la forme d'une surface tournante décrite par au moins un arête de coupe (8) de la dent coupante (5) au niveau de la partie postérieure (4) peut être cylindrique, conique, paraboloïde, hyperboloïde, ou une combinaison de ce qui precede.

3. Fraise selon la revendication 1, **caractérisée en ce que** la cavité antérieure dans lela partie antérieure (3) du secteur de travail (2) s'étend partiellement jusqu'à la partie postérieure (4) du secteur de travail (2).

4. Fraise selon l'une quelconque des revendications 1 à 3, **caractérisée en ce que** la cavité antérieure a une forme de rotation sphérique, sphéroïdale, elliptique, ovoïde ou autre similaire.

5. Fraise selon l'une quelconque des revendications 1 à 4, **caractérisée en ce que** le diamètre de la partie antérieure (3) est le même que le diamètre de la partie postérieure (4), dans lequel la partie antérieure (3) est un hémisphère.

6. Fraise selon l'une quelconque des revendications 1 à 4, **caractérisée en ce que** le diamètre de la partie antérieure (3) est supérieur au diamètre de la partie postérieure (4).

7. Fraise selon l'une quelconque des revendications précédentes, **caractérisée en ce que** la partie antérieure (3) de la section de travail comporte une dent de coupe (5), qui est formée comme un élément de coque sphérique (7), représentant un segment d'une sphère creuse avec une largeur d'arc angulaire α dans le plan équatorial de 45° à 180°, de préférence de 60° à 180°.

8. Fraise selon la revendication 7, **caractérisée en ce que** la largeur angulaire α dans le plan équatorial de l'arc de l'élément de coque sphérique (7) est de 90 ° à 180° et un trou traversant supplémentaire (11) est prévu dans la paroi de l'élément de coque sphérique (7).

9. Fraise selon l'une quelconque des revendications 1 à 6, **caractérisée en ce qu'**il y a deux dents de coupe identiques diamétralement opposées (5), qui dans la partie antérieure (3) du secteur de travail (2) ont la forme d'éléments de coque sphériques (7), représentant segments d'une sphère creuse avec une largeur d'arc angulaire α dans le plan équatorial de 10° à 90°.

10. Fraise selon l'une quelconque des revendications 1 à 6, **caractérisée en ce qu'**il y a trois dents de coupe identiques (5) disposées symétriquement par rapport à l'axe central de la fraise, lesdites dents de coupe (5) au niveau de la partie antérieure (3) du secteur de travail (2) ont la forme d'éléments de coque sphériques (7) représentant un segment d'une sphère creuse avec une largeur angulaire α de l'arc dans le plan équatorial de 10° à 45°.
